(19) Europäisches Patentamt
European Patent Office
Office européen des brevets

(11) Veröffentlichungsnummer: **0 250 739**
**A2**

# (12) EUROPÄISCHE PATENTANMELDUNG

(21) Anmeldenummer: **87105562.0**

(22) Anmeldetag: **14.04.87**

(51) Int.Cl.[3]: **C 01 B 33/24**
C 08 K 3/34, D 21 H 3/78

(30) Priorität: **28.06.86 DE 3621705**

(43) Veröffentlichungstag der Anmeldung:
**07.01.88 Patentblatt 88/1**

(84) Benannte Vertragsstaaten:
**AT BE CH DE ES FR GB GR IT LI LU NL SE**

(71) Anmelder: **Giulini Chemie GmbH**
**Giulinistrasse 2 Postfach 150 480**
**D-6700 Ludwigshafen/Rhein(DE)**

(72) Erfinder: **Urmann, Ernst, Dr. Dipl.-Chem.**
**Limesstrasse 3**
**D-6700 Ludwigshafen (Rhein)(DE)**

(72) Erfinder: **Potencsik, Istvan, Dr. Dipl.-Chem.**
**Am Steingarten 6**
**D-6800 Mannheim(DE)**

(72) Erfinder: **Kretschmer, Matthias, Dr. Dipl.-Chem.**
**Rosenstrasse 10**
**D-6704 Mutterstadt(DE)**

(74) Vertreter: **Benatzky, Erika, Dr.**
**Giulinistrasse 2 Postfach 150480**
**D-6700 Ludwigshafen/Rh.(DE)**

(54) **Flächenförmig miteinander verfilzte und vernetzte Xonotlitkristalle und ihre Herstellung.**

(57) Flächenförmig miteinander verfilzte und vernetzte Primärkristalle vom Xonotlittyp werden durch hydrothermale Kristallisation hergestellt. Besonderes Merkmal des Verfahrens ist die Anwendung von Scherkräften nach dem Rotor-Stator Prinzip.

Auf diese Weise hergestelltes Xonotlit kann zur Verstärkung von bahnförmigen und folienartigen Flächengebilden aus Kunststoff, Papier und Pappe Verwendung finden.

EP 0 250 739 A2

Croydon Printing Company Ltd.

# Flächenförmig miteinander verfilzte und vernetzte Xonotlitkristalle und ihre Herstellung

Gegenstand der vorliegenden Erfindung sind flächenförmig miteinander verfilzte und vernetzte Xonotlitkristalle, hier auch als Xonotlitkristallfasern bezeichnet, sowie ihre Herstellung und Verwendung in papier-, pappe- oder kartonartigen Gebilden.

Xonotlit ist bekanntlich ein Calciumsilikathydrat (Calciumhydrosilikat), das sowohl als Mineral in der Natur vorkommt als auch durch Hydrothermalsynthese aus calcium- und siliciumhaltigen Verbindungen hergestellt werden kann. Es besitzt die Formel

$$6\ CaO\ .\ 6\ SiO_2\ .\ H_2O \text{ bzw. } Ca_6\ Si_6O_{17}\ (OH)_2$$

und zeigt nadelförmige Kristallstruktur.

Weiterhin ist bekannt, daß die bei der hydrothermalen Synthese gebildeten nadelförmigen Xonotlitkristalle eine sehr hohe Agglomerationsneigung zeigen und praktisch ausschließlich als hohlkugelförmige Teilchen mit Sekundärstruktur anfallen. Unvernetzte nadelförmige Kristalle können auf hydrothermalem Wege nur sehr schwierig, wenn überhaupt, hergestellt werden.

Es ist nicht überraschend, daß die Anwendungsgebiete der wasserhaltigen Calciumsilikate, insbesondere Calciumsilikate des Xonotlittyps, weitestgehend von der Struktur der Sekundärpartikel bestimmt werden. Hohlkugelförmige Sekundärpartikel haben eine geringe Dichte und weisen eine für viele Zwecke ausreichende mechanische Festigkeit auf. Sie sind wegen dieser Struktur besonders zur Herstellung von leichtgewichtigen thermischen Isolierkörpern geeignet. Als verstärkende Füllstoffe in Kunststoffen, papier-, pappen- und kartonartigen

Gebilden werden dagegen die hohlkugelartigen Sekundärteilchen nicht eingesetzt.

Hohlkugelförmige Sekundärteilchen sind gegenüber mechanischer Beanspruchung sehr stabil. Dagegen soll gemäß CA 96 (1982) 204503h ein Teil der Sekundärteilchen durch Säurebehandlung, wahrscheinlich Herauslösen von Calcium, zerstört werden.

Xonotlitteilchen mit der vorerwähnten Sekundärstruktur sind ausführlich beschrieben in der US-PS 4 162 924. Demnach entstehen bei der hydrothermalen Synthese aus Calciumoxid, Siliciumdioxid und Wasser hohkugelförmige Sekundärpartikel, die aus nadel- bis faserförmigen, miteinander verfilzten und vernetzten Xonotlitprimärkristallen aufgebaut sind.

Die Herstellung von kristallinen Calciumhydrosilikate, insbesondere Xonotlite, enthaltenden thermischen Isolierkörpern und Baumaterialien geringer Dichte ist auch bereits Gegenstand zahlreicher Patente und Patentanmeldungen. In Abhängigkeit von den Verfahrensparametern können die bekannt gewordenen Herstellungsprozesse in zwei Gruppen eingeteilt werden:

a) die Ausgangsstoffe (CaO, $SiO_2$, $H_2O$) werden unter Bildung einer kristallinen Calciumhydrosilikataufschlämmung hydrothermal umgesetzt, anschließend geformt und getrocknet. Vor oder nach der hydrothermalen Umsetzung werden der Suspension üblicherweise noch faserförmige Stoffe zur Erhöhung der mechanischen Festigkeit zugesetzt. Ein derartiges Verfahren ist z. B. Gegenstand der US-PS 3 816 149 und DE-PS 2 953 526.

b) die Ausgangsstoffe (CaO,, $SiO_2$, $H_2O$) werden zu einem gelartigen Produkt, das in der Literatur

und hier auch als CSH-Phase bezeichnet wird, umgesetzt, das anschließend in einer Form im Autoklaven gehärtet wird, wobei das kristalline Calciumhydrosilikat entsteht, das üblicherweise Tobermorit und/oder Xonotlit ist. Auch bei dieser Herstellungsweise können dem gelartigen Zwischenprodukt oder der Ausgangsmischung faserförmige Materialien zur Festigkeitssteigerung zugesetzt werden. Die Tobermorit- bzw. Xonotlitkristallbildung erfolgt demnach im Formkörper. In der US-PS 3 317 643 und EU-A 0 033 522 sind Prozesse vorstehender Art beschrieben.

In der DE 33 06 528 A1 wird bereits vorgeschlagen, nadelförmige Xonotlitkristalle eines bestimmten Längen-Breiten-Verhältnisses in papier-, karton- oder pappenartigen Werkstoffen als Füllstoff zu verwenden. Die erzielte Gefügefestigkeit der Werkstoffe wird dabei der Wasserstoffbrückenbindungsfähigkeit des Restfeuchte enthaltenden Xonotlits zugeschrieben. Eigene Versuche haben nunmehr gezeigt, daß hohlkugelförmige Sekundärteilchen, die aus den nadelförmigen Xonitlitkristallen gemäß DE 33 06 528 A1 bestehen, zur Verbesserung der Gefügefestigkeit in papier-, karton- oder pappen-Werkstoffen wenig geeignet sind.

Es stellte sich somit die Aufgabe, ein technisch brauchbares Verfahren zur Gewinnung von nicht hohlkugelförmigen Xonotlitteilchen zu finden, die zur Erhöhung der Gefügefestigkeit von flächenförmigen Gebilden besser geeignet sind als die hohlkugelförmigen.

Es wurde bereits verschiedentlich versucht, die Bildung der Sekundärteilchen bei der hydrothermalen Synthese zu verhindern. Nach CA 89 (1978) 75913w soll

dies möglich sein, wenn die hydrothemale Synthese in Gegenwart von organischen Silikonen erfolgt. Das erhaltene Xonotlitpulver soll sich als Füllstoff in Kunststoffen besser dispergieren lassen. Andere organische und anorganische Zusätze sind für den angegebenen Zweck ebenfalls schon getestet worden. Es hat sich jedoch gezeigt, daß die Oberflächeneigenschaften der gebildeten Calciumhydrosilikate durch derartige Maßnahmen erheblich verändert werden. Oft erhält man dabei auch lediglich kleinere Sekundärpartikel.

Überraschenderweise kann die gestellte Aufgabe durch hydrothermale Kristallisation einer $SiO_2$, CaO und/oder $Ca(OH)_2$ und Wasser enthaltende Synthesemischung dann gelöst werden, wenn man vor und/oder während und/oder nach Bereitung der Synthesemischung unter Gelbildung bei Temperaturen unterhalb 100 °C vorzugsweise bei Temperaturen zwischen 25 und 80 °C, und/oder während der Kristallisation bei Temperaturen oberhalb 175 °C, vorzugsweise 180 bis 230 °C, Scherkräfte auf die wäßrige Suspension der Komponenten und/oder Komponentenmischung (Synthesemischung) einwirken läßt.

Nach einer besonders vorteilhaften Ausführungsform der Erfindung läßt man die die Scherkräfte vor der hydrothermalen Kristallisation auf die Synthesemischung so lange einwirken, bis der Gelgehalt in der Synthesemischung mindestens 80 Gew.%, bezogen auf die eingesetzte Menge von CaO und $SiO_2$, beträgt.

Das Molverhältnis CaO : $SiO_2$ in der Synthesemischung liegt mit Vorteil zwischen 0,9 : 1 und 1,2 : 1. Werden die wäßrigen Suspensionen der Komponenten CaO und $SiO_2$ vor und nach ihrer Vermischung der Scherkräftebehandlung unterworfen, so sollte der Feststoffgehalt in der Synthesemischung maximal 6 bis 10 Gew.% betragen. Da der Feststoffgehalt der wäßrigen CaO-Suspension wie der Feststoffgehalt der $SiO_2$-Suspension bei der Scherkräftebehandlung vor der Vermischung zwischen 3 und 20 Gew.% liegen kann, müssen Synthese-

mischungen, hergestellt aus CaO- und $SiO_2$-Suspensionen mit einem Feststoffgehalt größer als 10 Gew.%, z. B. 10,1 bis 20 Gew.%, mit der erforderlichen Wassermenge verdünnt werden.

Nach einer anderen Ausführungsform der Erfindung kann die Synthesemischung jedoch auch so hergestellt werden, daß die Komponenten CaO bzw. $Ca(OH)_2$ und $SiO_2$ in fester Form unter Einwirkung von Scherkräften unmittelbar in das Wasser eingetragen und dort der Scherkräftebehandlung solange unterworfen werden, bis die gewünschte Menge der CSH-Phase (Gelgehalt) erzielt ist. Der Feststoffgehalt der Synthesemischung liegt bei dieser Ausführungsform vorteilhafterweise bei 6 bis 8 Gew.%, kann jedoch auch höher oder niedriger liegen, z. B. 3 oder 10 Gew.% sein.

Daß durch die Einwirkung von Scherkräften auf die Synthesemischung, gegebenenfalls auch auf die Suspensionen der beiden Ausgangskomponenten CaO und $SiO_2$, die Bildung von hohlkugelförmigen Xonotlit-Sekundärteilchen bei der hydrothermalen Kristallisation verhindert werden kann, war aus dem Stand der Technik nicht vorhersehbar; auch war nicht vorhersehbar, daß sich anstelle der hohlkugelförmigen Sekundärteilchen flächenförmig vernetzte Sekundärteilchen bilden würden.

Zur Erzeugung der Scherkräfte können alle Vorrichtungen mit hoher Scherwirkung auf kleinstem Raum eingesetzt werden. Als besonders geeignet erwiesen sich Rührer, die nach dem Rotor/Stator-Prinzip arbeiten, wie beispielsweise der Ultra-Turrax(R) und der Dispax-Reactor(R) der Firma JAHNKE & KUNKEL, wie auch die Dispergiermaschinen Supraton(R) der Fa. KRUPP-Industrietechnik und die Durchlaufdispergiereinheiten der Fa. YSTRAL. Auch Scheiben- und Turbinenrührer, die ausschließlich zur Erzeugung besonders großer Scherkräfte auf kleinstem Raum konstruiert sind, ergeben die gewünschte Wirkung.

Werden die hohen Scherkräfte mit einem Rührer erzeugt, der nach dem Rotor/Stator-Prinzip arbeitet, sollte die Umfangsgeschwindigkeit mindestens 16 m/sec., vorzugsweise jedoch 20 bis 60 m/sec. betragen. Besonders günstig ist es, die Scherkräfte bereits bei Bereitung der Synthesemischung einwirken zu lassen, und zwar bei etwas erhöhter Temperatur. Temperaturen von 25 bis 80 °C sind geeignet.

Die hydrothermale Kristallisation der Synthesemischung oder CSH-Phase kann gemäß der Erfindung ebenfalls unter Einwirkung von Scherkräften erfolgen, wobei die Temperatur oberhalb 175 °C liegen muß. 180 bis 230 °C sind bei der Kristallisation besonders günstig.

Die nach dem neuen Verfahren hergestellten Xonotlitkristalle sind flächenförmig miteinander verfilzt und vernetzt. Sie sind neu und zur Verstärkung von bahnförmigen oder folienartigen Flächengebilden aus Kunststoff, Papier und Pappe wegen ihrer festigkeitssteigernden Wirkung hervorragend geeignet. Außerdem bewirken sie eine schwere Entflammbarkeit der Flächengebilde. An dieser Stelle ist weiterhin erwähnenswert, daß die neuen, flächenförmig miteinander verfilzten und vernetzten Xonotlitkristalle in besonders hohem Maße geeignet sind zur Verstärkung von Flächengebilden, die ganz oder teilweise aus anorganischen Fasern, wie Glas- und Mineralfasern bestehen. Derartige Flächengebilde weisen als Asbestsubstitute hervorragende Eigenschaften auf.

Die Breite der flächenförmig vernetzten Primärkristalle ist meistens kleiner als 1 µm und die Länge kleiner als 5 µm. Dabei kann die BET-Oberfläche 30 bis 120, vorzugsweise 60 bis 100 $m^2/g$ betragen.

Ein anderer Vorteil des neuen Verfahrens wird darin gesehen, daß die Bildung der CSH-Phase im Vergleich zu bekannten Verfahren wesentlich schneller abläuft. Auch kann bei der Weiterverarbeitung der erfindungsgemäß hergestellten CSH-Phase die Reaktionszeit bei der hydrothermalen Kristallisation zu Xonotlit bis auf etwa die Hälfte reduziert werden.

Eine Aktivierung der hydrothermalen Kristallisation wird in der DE-PS 24 02 670 beschrieben. Bei dem dort beschriebenen Verfahren geht man von einer Synthesemischung aus, in der die Menge an Wasser 2,5- bis 20mal so groß ist wie das Gesamtgewicht der Rohmaterialien. Außerdem enthält die Synthesemischung zur Beschleunigung der Reaktionsgeschwindigkeit noch Alkalien. Die Mischung wird zunächst 1 bis 5 Stunden auf 50 bis 100 °C erhitzt, wobei ein gelartiges Zwischenprodukt (CSH-Phase) von mehr 50 Gew.%, bezogen auf die Gesamtmenge an CaO und $SiO_2$ im Ausgangsmaterial, entstehen soll. Anschließend wird das Zwischenprodukt kontinuierlich durch Zugabe der 10- bis 25-fachen Gewichtsmenge von unter Druck stehendem Wasser hoher Temperatur in weniger als 5 Minuten auf über 160 °C erhitzt, wobei die Reaktionsmischung über einen Zeitraum von 0,5 bis 4 Stunden bei dieser Temperatur stehen gelassen wird. Durch Zugabe von geringen Mengen an Magnesiumoxid soll die hydrothermale Kristallisation beschleunigt werden, nicht jedoch die Bildung der CSH-Phase. Flächenförmig miteinander verfilzte und vernetzte Primärkristalle von Xonotlit werden bei diesem Verfahren nicht erhalten. Wie bei den anderen

bekannten Verfahren fallen praktisch nur hohlkugelförmige Teilchen mit geringer Dichte an, die zur Herstellung von leichtgewichtigen thermischen Isolierkörpern eingesetzt werden.

Nach einer weiteren Ausführungsform der Erfindung kann auch eine zusätzliche oder ausschließliche Scherung während der hydrothermalen Kristallisation erfolgen. Bei beiden Verfahrensweisen entstehen flächenförmig vernetzte Xonotlitkristalle.

Als kieselsäurehaltiges Material wird bei dem erfindungsgemäßen Verfahren vorzugsweise amorphes Material eingesetzt, insbesondere Diatomeenerde, Fällungskieselsäure oder bei der Herstellung von Silicium oder Ferrosilicium anfallender Filterstaub. Kristallines kieselsäurehaltiges Material kann zwar auch eingesetzt werden, jedoch sollte dann die Partikelgröße kleiner als 10 µm sein.

Als kalkhaltiges Material kann sowohl gebrannter als auch gelöschter Kalk (Calciumhydroxid) Verwendung finden.

Anhand der nachstehenden Beispiele wird der Gegenstand der Erfindung nunmehr näher erläutert:

Beispiel 1:

Zu 1000 (1500, 2000) ml Wasser werden 68 (102, 136) g $SiO_2$ (Fällungskieselsäure, $SiO_2$ 88,4 %, $Al_2O_3$ < 0,2 %, $Na_2SO_4$ < 1,5 %, BET-Oberfläche > 100 $m^2/g$) gegeben und die Aufschlämmungen mit einem Ultra-Turrax$^{(R)}$ der Fa. JAHNKE & KUNKEL je 5, 10 und 15 Minuten lang behandelt (Umfangsgeschwindigkeit des Rotors: 21 m/sec.). Zu 1000 (1500, 2000) ml Wasser werden 61 (92, 122) g

gebrannter Kalk (CaO 97,6 %, $Al_2O_3$ 0,1 %, $CO_2$ 0,8 %) gegeben. Die Aufschlämmungen werden ebenfalls je 5, 10 und 15 Minuten lang mit o. a. Dispergiergerät bei gleicher Umfangsgeschwindigkeit des Rotors gerührt. Anschließend werden gleiche Volumina von jeweils zwei gleich lange dispergierten Suspensionen ($SiO_2$ und $Ca(OH)_2$) zusammengegeben, und zwar jeweils Suspensionen mit gleicher Konzentration. Die Mischung (Molverhältnis CaO : $SiO_2$ = 1,06 : 1) wird erneut über einen Zeitraum von 5 Minuten mit dem Ultra-Turrax(R) behandelt. Die Temperaturen der Mischungen sind max. 80 °C oder darunter. Anschließend wird die Zeit gemessen, die beim Stehen der Mischung ohne Rühren bis zum Erstarren verstreicht (Gelzeit).

In Abb. 1 ist die Abhängigkeit der Gelzeit von der Scherbehandlungsdauer graphisch aufgetragen. Die graphische Darstellung zeigt, daß die Gelzeit mit abnehmendem Volumen und zunehmender Scherbehandlungsdauer schnell absinkt. Die Rührenergie ist bei allen Versuchen gleich.

<u>Beispiel 2:</u>

Zu 1000 (1500, 2000) ml Wasser werden 34 (51, 68) g $SiO_2$ der gleichen Zusammensetzung wie in Beispiel 1 und 30,5 (46, 61) g CaO der gleichen Zusammensetzung wie in Beispiel 1 gegeben. Die Suspensionen werden mit einem Ultra-Turrax(R) bei einer Umfangsgeschwindigkeit des Rotors von 21 m/sec. während jeweils 5, 10 und 15 Minuten geschert. Das Molverhältnis von CaO : $SiO_2$ beträgt 1,06 : 1. Anschließend wird die Gelzeit gemessen. Die Temperaturen der Mischungen waren gleich oder kleiner als 80 °C.

In Abb. 2 ist die Abhängigkeit der Gelzeit von der Scherbehandlungsdauer aufgetragen. Man sieht, daß bei dieser Versuchsanordnung längere Scherbehandlungszeiten zur Erzielung der gleichen Gelzeiten erforderlich sind als im Beispiel 1.

Beispiel 3:

In diesem Beispiel wird der bei der Scherbehandlung erzielte Umsetzungsgrad in der CSH-Phase bestimmt, und zwar bei den nach Beispiel 1 hergestellten Synthesemischungen. Es werden 2000 ml einer 3 Gew.% Calciumoxid und 3 Gew.% Kieselsäure enthaltenden Suspension entsprechend Beispiel 1 hergestellt. 0, 10, 20, 30, 40 und 50 Minuten nach Beendigung der Scherbehandlung mit dem Ultra-Turrax(R) werden Proben von je 100 ml entnommen und auf einer Porzellanfilternutsche abgesaugt, mit Alkohol gewaschen und getrocknet. Nach dem Trocknen werden die Proben 2 Stunden bei 900 °C geglüht und Röntgendiagramme angefertigt. Bei vollständiger Umsetzung der Komponenten CaO und $SiO_2$ und Wasser zur CSH-Phase mit einem Molverhältnis CaO : $SiO_2$ von 1 : 1, muß aus diesen Phasen beim Erwärmen auf 900 °C die vollständige Umwandlung in Wollastonit, $CaSiO_3$, zu beobachten sein.

Abb. 3 zeigt das Röntgendiagramm der geglühten Probe, die nach 40 Minuten aus der Suspension gezogen wurde. Die Röntgenreflexe sind vollständig als Wollastonit indizierbar (s. Tab. 1).

Beispiel 4 :

Die Versuchsausführung entspricht dem Beispiel 3; anstelle des dort eingesetzten Ultra-Turrax-Rührers wird als Rührwerk jedoch ein üblicher Laborrührer mit Kreuzbalken (ca. 500 u/min.$^{-1}$) eingesetzt.

Abb. 5 zeigt das Röntgendiagramm einer nach 40 Minuten gezogenen Probe, die nach Filtration, Waschen und Trocknung, 2 Stunden auf 900 °C erhitzt wurde. Die Röntgenreflexe sind nicht als die von Wollastonit indizierbar (s. Tab. 1).

Beispiel 5:

Die Versuchsausführung entspricht der des Beispiels 3; als kieselsäurehaltiges Material wird ein Abfallprodukt aus der Si-Produktion eingesetzt ($SiO_2$ 96,5 %, $Al_2O_3$ 0,3 %, $Na_2O$ 0,1 %, BET-Oberfläche 22 $m^2/g$).

Abb. 4 zeigt das Röntgendiagramm einer nach 40 Minuten gezogenen und mit Alkohol gewaschenen Probe, die 2 Stunden lang auf 900 °C erhitzt worden ist. Die Röntgenreflexe sind ebenfalls vollständig als die von Wollastonit indizierbar (s. Tab. 1).

Beispiel 6:

Eine nach Beispiel 1 hergestellte Synthesemischung wird in einen, mit einem Ankerrührer versehenen Autoklaven gefüllt und 30 Minuten bei einer Temperatur von 215 °C (20 bar) erhitzt.

Abb. 6 zeigt das Röntgendiagramm des erhaltenen Xonotlits und Abb. 7 eine REM-Aufnahme der nahezu flächenförmig untereinander vernetzten Xonotlitkristalle.

Beispiel 7: (Vergleichsbeispiel)

Eine nach Beispiel 4 hergestellte Synthesemischung wird unter den in Beispiel 6 genannten Reaktionsbedingungen im Autoklaven hydrothermal umgesetzt. Das in Abb. 8 gezeigte Röntgendiagramm zeigt, daß die Umsetzung zu Xonotlit nicht vollständig ist.

Beispiel 8:

1000 l einer wäßrigen Suspension, die 39,5 kg amorphe Kieselsäure ($SiO_2$ 96,5 %, $Al_2O_3$ 0,3 %, $Na_2O$ 0,1 %) und 50,5 kg Kalkhydrat ($Ca(OH)_2$ 97,5 %, $CaCO_3$ 0,6 %) enthält, werden in einen mit einem Rührwerk versehenen Autoklaven gepumpt und durch Einleiten von Dampf auf eine Temperatur von 215 °C (20 bar) erhitzt. Während des Aufheizens wird die Suspension durch eine In-Line-Supraton(R)-Dispergiermaschine gepumpt. Nach 20-minütigem Umpumpen bei 215 °C ist die Reaktion beendet. Die erhaltenen Xonotlitkristalle haben eine maximale Länge von 3 µm und einen Durchmesser < 0,3 µm und sind flächenförmig miteinander vernetzt.

Tabelle 1

| d - Werte (Å) | | | |
|---|---|---|---|
| ß - $CaSiO_3$ | Beispiel 3 | Beispiel 5 | Beispiel 4 |
| 3.84 | 3.86 | 3.85 | - |
| 3.51 | 3.54 | 3.52 | - |
| 3.31 | 3.33 | 3.32 | 3.36 |
| 3.08 | 3.10 | 3.11 | - |
| 2.976 | 2.991 | 2.98 | - |
| 2.790 | 2.798 | - | - |
| 2.750 | 2.742 | - | 2.754 |
| 2.712 | 2.730 | - | - |
| 2-470 | 2.483 | 2.484 | 2.473 |
| 2.346 | 2.349 | 2.349 | - |
| 2.295 | 2.308 | 2.307 | - |
| 2.209 | 2.207 | 2.190 | 2.192 |
| 2.179 | 2.178 | - | - |
| 2.017 | 2.029 | - | - |
| 1.933 | 1.923 | - | - |
| 1.826 | 1.834 | 1.833 | - |
| 1.803 | 1.801 | 1.801 | - |
| 1.764 | 1.762 | 1.761 | - |
| 1.753 | 1.753 | - | - |
| 1.718 | 1.721 | 1.723 | - |
| 1.619 | 1.614 | 1.612 | - |
| 1.548 | 1.540 | - | - |
| 1.524 | 1.523 | - | - |
| 1.483 | 1.483 | 1.482 | 1.48 |
| 1.365 | 1.367 | - | - |
| Philips-Pulver-Difraktometer-System ADP-15: CuK$\alpha$ $\lambda$ = 1.54 | | | |

## Patentansprüche

1. Verfahren zur Herstellung von flächenförmig miteinander verfilzten und vernetzten Primärkristallen vom Xonotlit-Typ durch hydrothermale Kristallisation einer $SiO_2$, CaO und/oder $Ca(OH)_2$ und Wasser enthaltenden Synthesemischung, dadurch gekennzeichnet, daß man vor und/oder während und/oder nach Bereitung der Synthesemischung unter Gelbildung bei Temperaturen unterhalb von 100 °C, vorzugsweise zwischen 25 und 80 °C, und/oder während der Kristallisation bei Temperaturen oberhalb 175 °C, vorzugsweise 180 bis 230 °C, Scherkräfte auf die wäßrigen Suspensionen der Komponenten und/oder Komponentenmischung (Synthesemischung) einwirken läßt.

2. Verfahren nach Anspruch 1, dadurch gekennzeichnet, daß man die Scherkräfte vor der hydrothermalen Kristallisation so lange auf die Synthesemischung einwirken läßt, bis der Gelgehalt mindestens 80 Gew.%, bezogen auf die eingesetzte Menge von CaO und $SiO_2$, beträgt.

3. Verfahren nach den Ansprüchen 1 und 2, dadurch gekennzeichnet, daß in der Synthesemischung ein Molverhältnis CaO : $SiO_2$ von 0,9 zu 1 bis 1,2 zu 1 eingestellt wird.

4. Verfahren nach den Ansprüchen 1 bis 3, dadurch gekennzeichnet, daß man die Synthesemischung aus einer 3- bis 10-gewichtsprozentigen, insbesondere 6- bis 10-gewichtsprozentigen $SiO_2$-Suspension und einer 3- bis 10-, insbesondere 6- bis 10-gewichtsprozentigen $Ca(OH)_2$-Suspension herstellt.

5. Verfahren nach den Ansprüchen 1 bis 3, dadurch gekennzeichnet, daß man die Synthesemischung aus einer 10,1- bis 20-gewichtsprozentigen, unter Einwirkung von Scherkräften hergestellten wäßrigen $SiO_2$-Suspension und einer 10,1- bis 20-gewichtsprozentigen, unter Einwirkung von Scherkräften hergestellten wäßrigen $Ca(OH)_2$-Suspension herstellt, diese Synthesemischung durch Zugabe von Wasser auf einen maximalen Feststoffgehalt von 6 bis 10 Gew.% einstellt und einer Scherkrafteinwirkung unterwirft.

6. Verfahren nach den Ansprüchen 1 bis 5, dadurch gekennzeichnet, daß man die Scherkräfte mit einem Rührer nach dem Rotor/Stator-Prinzip erzeugt.

7. Verfahren nach Anspruch 6, dadurch gekennzeichnet, daß man den Rotor mit einer Umfangsgeschwindigkeit von mindestens 16 m/sec., vorzugsweise jedoch 20 bis 60 m/sec., einsetzt.

8. Flächenförmig miteinander verfilzte und vernetzte Xonotlitkristalle, hergestellt nach den Ansprüchen 1 bis 7.

9. Verwendung der flächenförmig miteinander verfilzten und vernetzten Xonotlitkristalle nach Anspruch 8 zur Verstärkung von bahnförmigen und folienartigen Flächengebilden aus Kunststoff, Papier, Karton und Pappe.

10. Verwendung der flächenförmig miteinander verfilzten und vernetzten Xonotlitkristalle nach Anspruch 8 zur Verstärkung von bahnförmigen und folienartigen Flächengebilden, die ganz oder teilweise aus anorganischen Materialen bestehen.

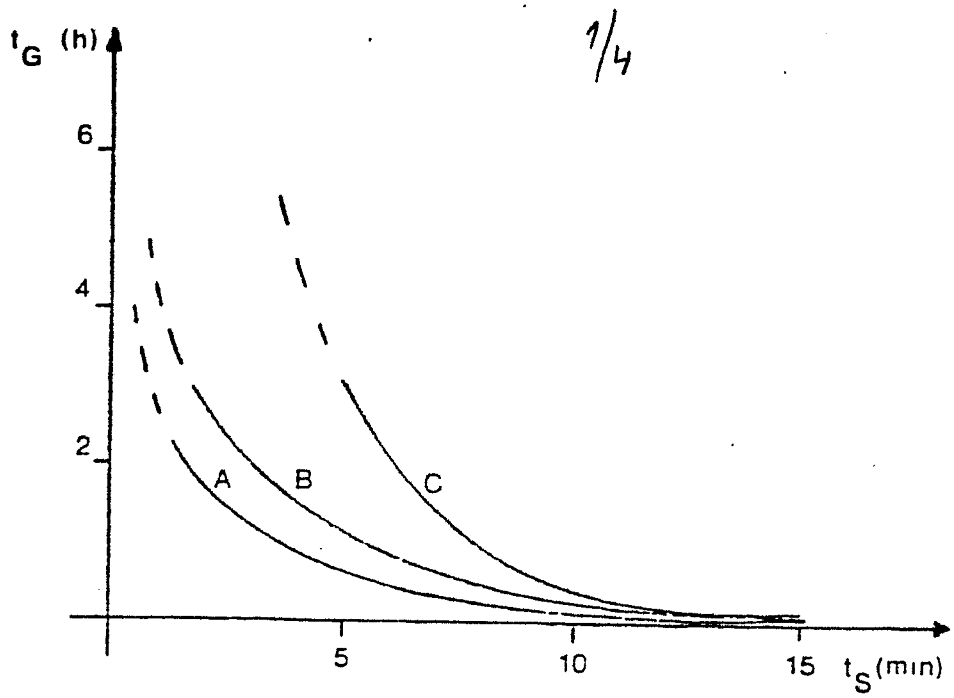


Abb. 1 : $t_G$ = Gelzeit; $t_S$ = Zeit der Scherbehandlung

Volumen der Suspensionen der Komponenten: A = 1000 ml

B = 1500 ml

C = 2000 ml

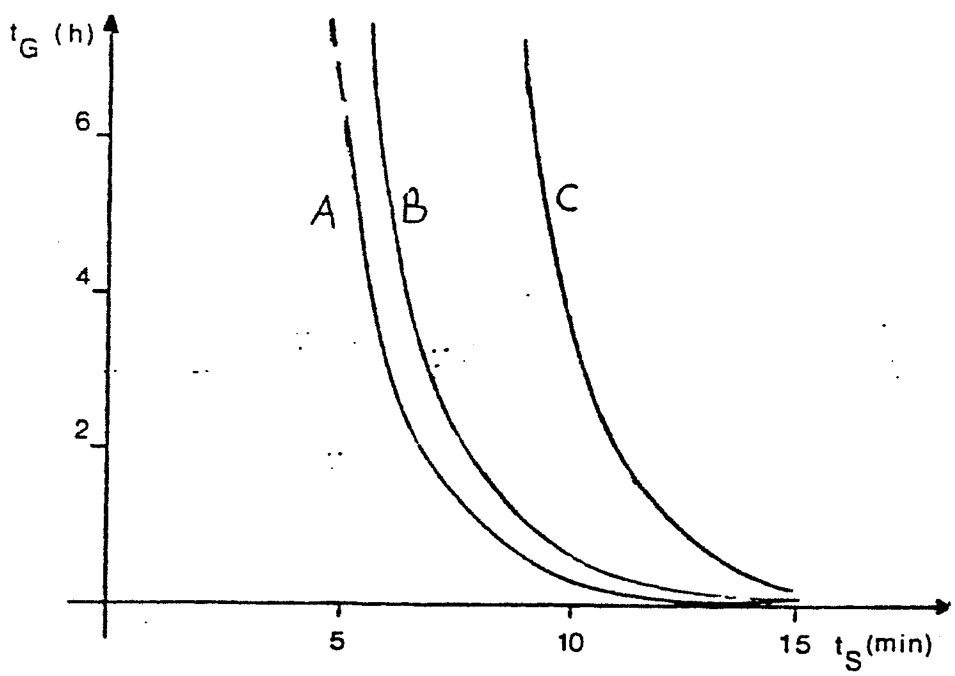


Abb. 2: $t_G$ = Gelzeit; $t_S$ = Zeit der Scherbehandlung

Volumen der Synthesemischung: A = 1000 ml

B = 1500 ml

C = 2000 ml

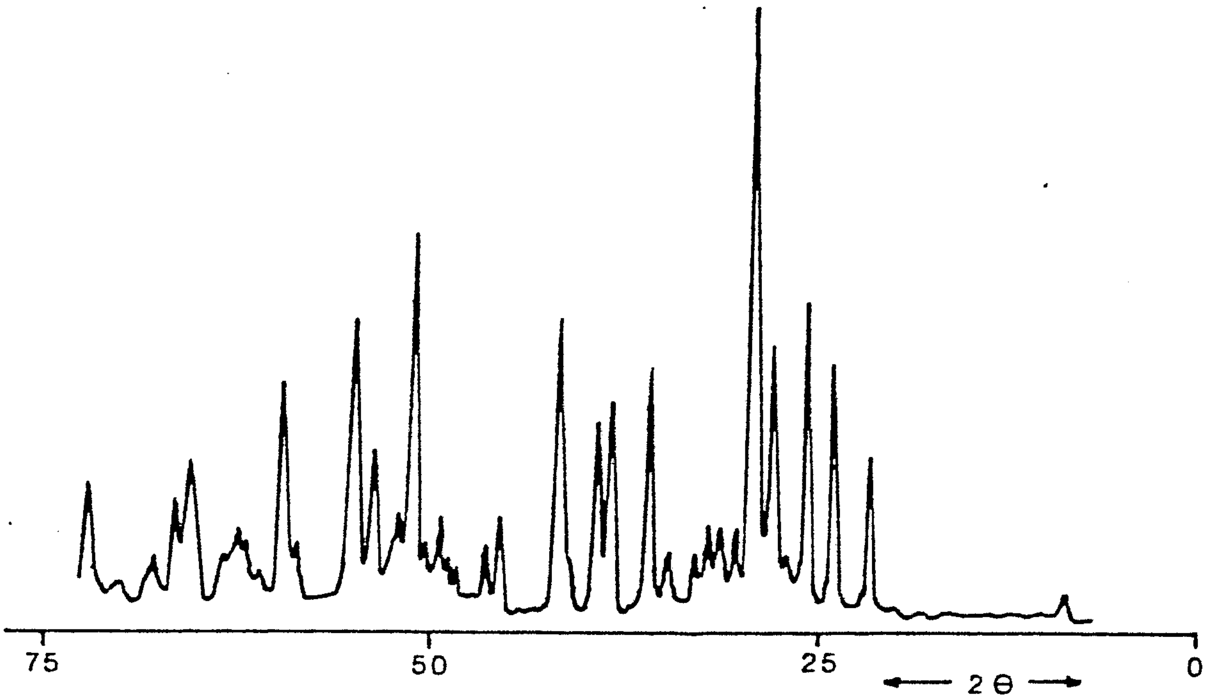


Abb. 3

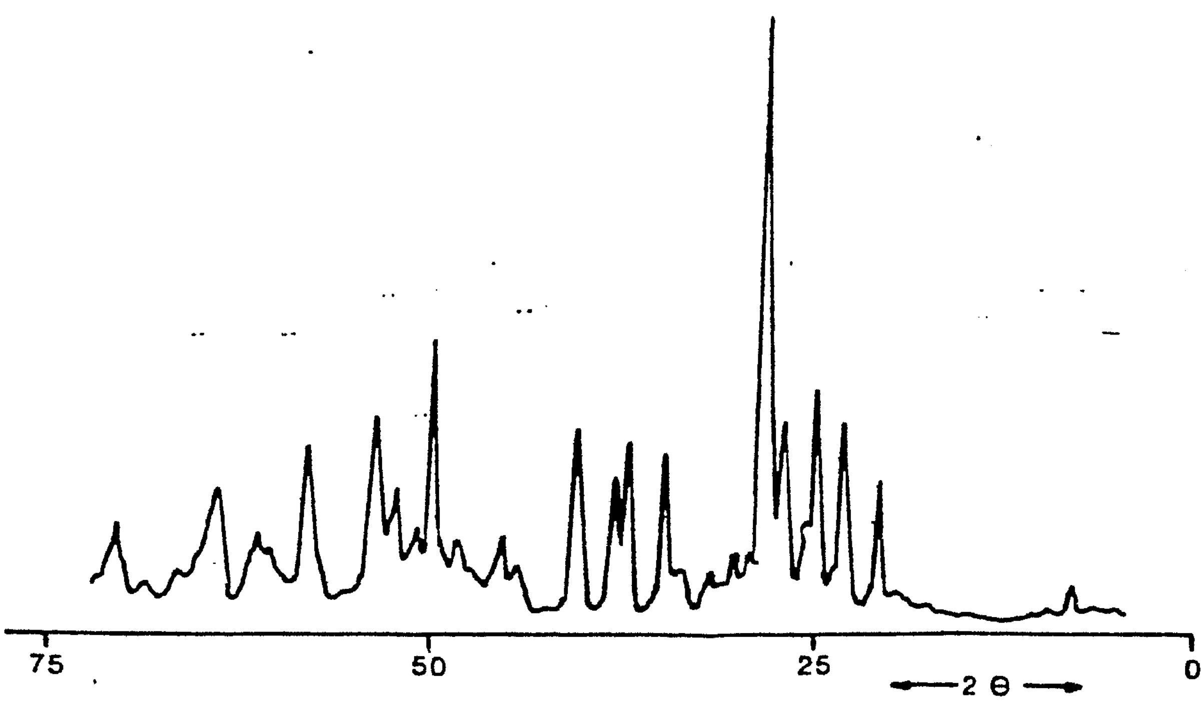


Abb. 4

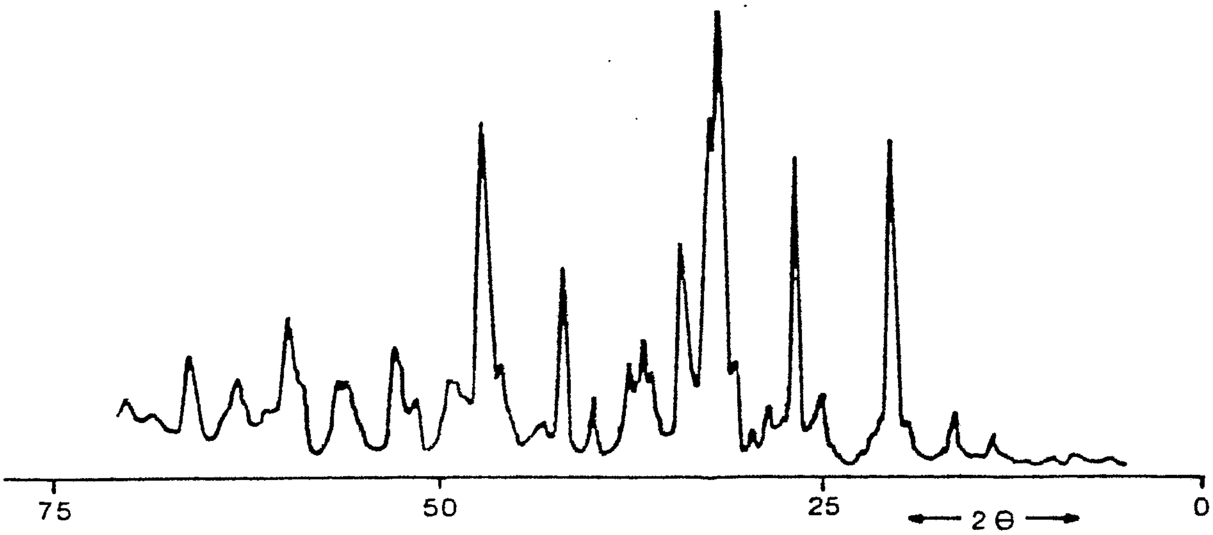


Abb. 5

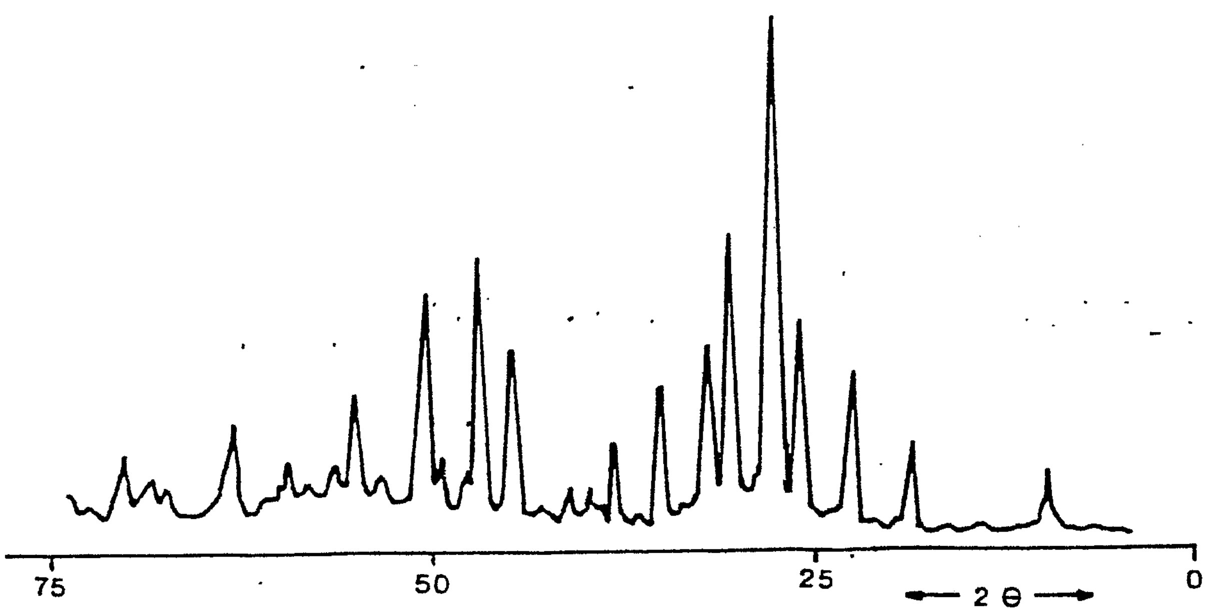


Abb. 6.

0250739

4/4

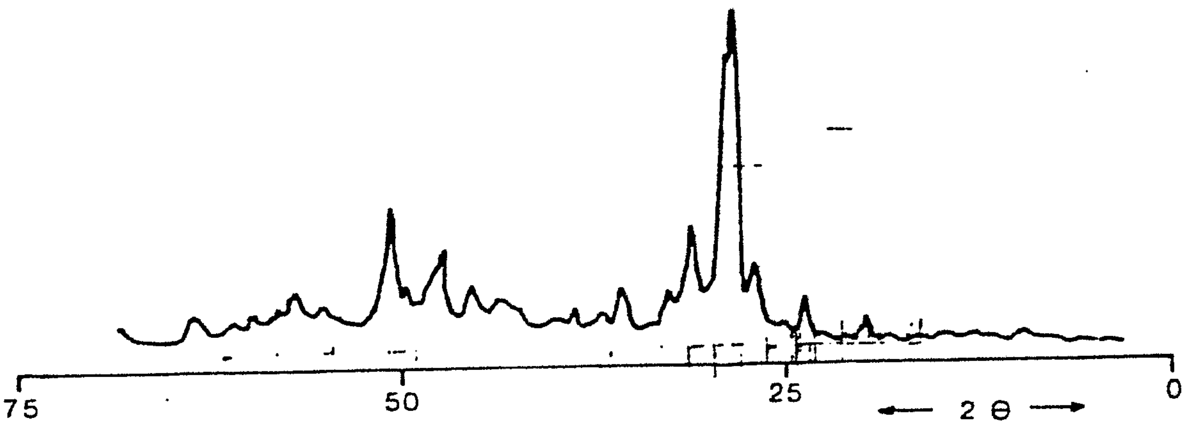


Abb. 8

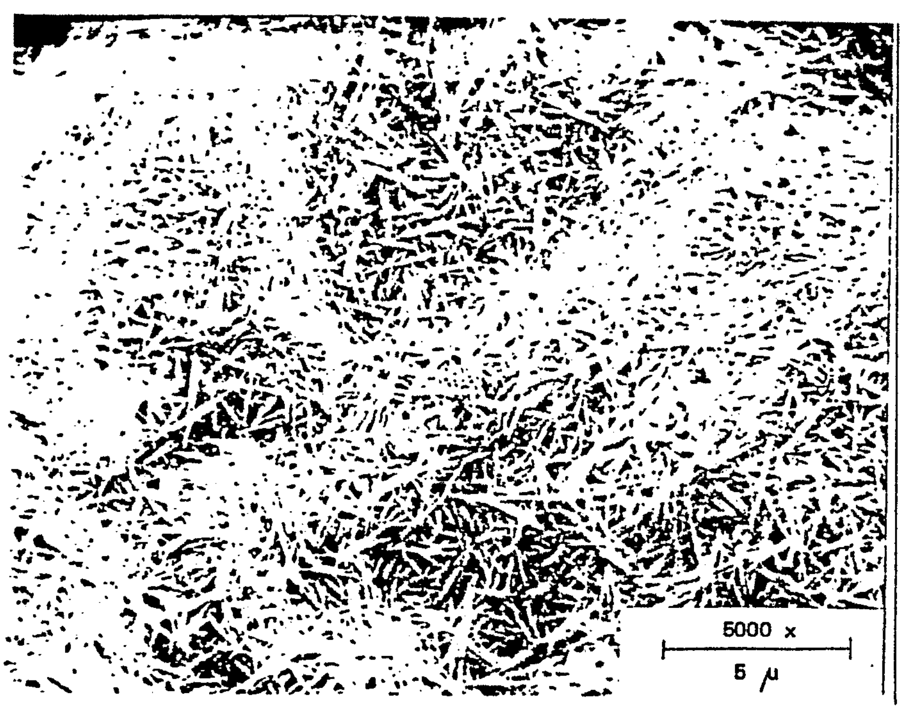


Abb. 7